# EUROPÄISCHE PATENTSCHRIFT

(11) **EP 3 405 748 B1**
(45) Veröffentlichungstag und Bekanntmachung des Hinweises auf die Patenterteilung: **12.06.2019**
(21) Anmeldenummer: 17721586.0
(22) Anmeldetag: 26.04.2017
(51) Int. Cl.: G01C 21/34

(54) **VERFAHREN UND SYSTEM ZUM ERMITTELN EINER ROUTE VON EINEM AUFENTHALTSORT EINES KRAFTFAHRZEUGS ZU EINEM ZIEL**
METHOD AND SYSTEM FOR DETERMINING A ROUTE FROM A MOTOR VEHICLE LOCATION TO A DESTINATION
PROCÉDÉ ET DISPOSITIF DE DÉTERMINATION D'UN ITINÉRAIRE ENTRE UN LIEU OÙ SE TROUVE UN VÉHICULE AUTOMOBILE ET UNE DESTINATION

(30) Priorität: 14.05.2016 DE 102016005937
(43) Veröffentlichungstag der Anmeldung: 28.11.2018
(73) Patentinhaber: Audi AG, 85045 Ingolstadt (DE)
(72) Erfinder: SCHMELL, Christian, 85049 Ingolstadt (DE); KNIEP, Johannes, 85051 Ingolstadt (DE); HILDEBRANDT, Günter, 91795 Dollnstein (DE); WEIGAND, Christoph, 85080 Gaimersheim (DE); SCHWENSFEIER, Florian, 86697 Oberhausen (DE)
(86) Internationale Anmeldenummer: PCT/EP2017/059969
(87) Internationale Veröffentlichungsnummer: WO 2017/198434

(56) Entgegenhaltungen:
- EP-A2- 2 141 456
- DE-A1-102014 210 147
- DE-A1-102014 217 453
- US-A1- 2014 278 104
- US-A1- 2016 012 720

## Beschreibung

Die Erfindung betrifft ein Verfahren zum Ermitteln einer Route von einem Aufenthaltsort eines Kraftfahrzeugs zu einem Ziel. Hierbei übermittelt eine Steuerungseinrichtung des Kraftfahrzeugs einen Notruf an einen Empfänger einer Zentrale. Eine Recheneinrichtung der Zentrale ermittelt die Route zu dem Ziel. Des Weiteren betrifft die Erfindung ein System zum Ermitteln einer Route von einem Aufenthaltsort eines Kraftfahrzeugs zu einem Ziel.

Die US2014/278104 A1 offenbart ein Navigationsverfahren, bei welchem ein Server eine Abfangstelle auswählt, an welcher sich ein reisendes Elektrofahrzug und ein Rettungsfahrzeug treffen können, um eine Notfall-Nachladung vorzunehmen. Die DE 10 2014 217 453 A1 beschreibt eine autonome Fahrzeugregelung für einen beeinträchtigten Fahrer eines Fahrzeugs, bei welchem ein Fahrzeugcomputer zur Kommunikation mit einem Server ausgelegt ist. Der Server kann das Fahrzeug anweisen, in einem autonomen Modus zu einer vorab gewählten medizinischen Notfalleinrichtung zu fahren oder zu einem Treffpunkt mit einem Notdienst wie einem Rettungswagen.

Die EP 2 860 078 A1 beschreibt ein Verfahren zum Betrieb eines Sicherheitssystems eines Kraftfahrzeugs, bei welchem ein Fahrzeug autonom zu einem Krankenhaus gesteuert wird, wenn eine Fahruntüchtigkeit des Fahrers und eine Notwendigkeit medizinischer Hilfe erkannt wird.

Die DE 10 2014 210 147 A1 betrifft ein Steuersystem für eine autonome Führung eines Fahrzeugs. Hierbei wird ein autonom fahrendes Fahrzeug durch ein Führungsfahrzeug abgeschleppt, welches Sensorsignale für das autonome Fahren des abgeschleppten Fahrzeugs liefert. Das Fahrzeug wird zu einem Ort abgeschleppt, zu welchem Rettungskräfte leichten Zugang haben. Aus dem Stand der Technik ist es des Weiteren bekannt, dass der Fahrer eines Kraftfahrzeugs, welcher nicht mehr fahrtüchtig ist, einen manuellen oder automatischen Notruf auslöst beziehungsweise triggert. Hierbei wird ein Datenpaket an eine Notrufzentrale übermittelt, welches die geographische Position des Fahrzeugs sowie gegebenenfalls weitere Informationen wie etwa den Fahrzeugtyp, die Schwere des Unfalls, eine Anzahl der Personen in dem Kraftfahrzeug und dergleichen enthält. Eine Rettungskraft beziehungsweise ein Rettungsfahrzeug, welches sich am nächsten zu dem Aufenthaltsort des den Notruf sendenden Kraftfahrzeugs befindet, begibt sich dann nach einer entsprechenden Information durch die Notrufzentrale zu dem Aufenthaltsort des Kraftfahrzeugs.

Abhängig von der Ausgangsposition beziehungsweise initialen Position, an welcher sich das Rettungsfahrzeug befindet, und abhängig von den Verkehrsverhältnissen kann jedoch die Anfahrt zu dem den Notruf sendenden Kraftfahrzeug stark variieren. Dies gilt beispielsweise, wenn es auf der Strecke zu dem Kraftfahrzeug, welches den Notruf gesendet hat, Stau gibt. Nachteilig ist also einerseits die lange Anfahrt bei initial weit entfernten Rettungskräften sowie die Verzögerung der Anfahrt aufgrund von ungünstigen Verkehrsverhältnissen wie etwa Stau.

Aufgabe der vorliegenden Erfindung ist es daher, ein Verfahren und ein System der eingangs genannten Art so zu verbessern, dass für das den Notruf sendende Kraftfahrzeug besonders rasch Hilfe durch Einsatzkräfte eines Rettungsfahrzeugs zur Verfügung steht.

Diese Aufgabe wird durch Verfahren mit den Merkmalen des Patentanspruchs 1 und durch ein System mit den Merkmalen des Patentanspruchs 11 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren zum Ermitteln einer Route von einem Aufenthaltsort eines Kraftfahrzeugs zu einem Ziel übermittelt eine Steuerungseinrichtung des Kraftfahrzeugs einen Notruf an einen Empfänger einer Zentrale. Eine Recheneinrichtung der Zentrale ermittelt die Route zu dem Ziel. Hierbei berücksichtigt die Recheneinrichtung der Zentrale bei einem Auswählen des Ziels eine erste Zeitspanne, welche das Kraftfahrzeug zum Zurücklegen der Route benötigt. Die Recheneinrichtung berücksichtigt des Weiteren eine zweite Zeitspanne, welche ein Rettungsfahrzeug zum Erreichen des Ziels benötigt. Das Ziel wird von der Recheneinrichtung hierbei derart ausgewählt, dass eine Summe der beiden Zeitspannen minimal ist. Hierbei berücksichtigt die Recheneinrichtung beim Ermitteln der ersten Zeitspanne und der zweiten Zeitspanne von weiteren Kraftfahrzeugen zur Verfügung gestellte Daten, wobei die Recheneinrichtung aus den Daten eine Schaltung von Lichtzeichenanlagen auf der Route des Kraftfahrzeugs und/oder des Rettungsfahrzeugs zu dem Ziel und/oder eine Möglichkeit, unter Beibehaltung einer sicheren Fahrweise des Kraftfahrzeugs und/oder des Rettungsfahrzeugs wenigstens eine Geschwindigkeitsbegrenzung auf der Route des Kraftfahrzeugs und/oder des Rettungsfahrzeugs zu dem Ziel zu übertreten, bestimmt. Mit anderen Worten sind die Routen von dem Kraftfahrzeug zu dem Ziel und von dem Rettungsfahrzeug zu dem Ziel im Hinblick auf die Anfahrtszeit optimiert. Bei dem Ziel handelt es sich somit um einen Treffpunkt, zu welchem sich sowohl das Kraftfahrzeug begibt, welches den Notruf gesendet hat, als auch das Rettungsfahrzeug. Derjenige Treffpunkt beziehungsweise dasjenige Ziel, welches insgesamt die kürzeste Anfahrtszeit in Anspruch nimmt, wird also ausgewählt. Dort trifft sich das Kraftfahrzeug mit dem Rettungsfahrzeug beziehungsweise mit der Rettungskraft.

Dem liegt die Erkenntnis zugrunde, dass es, beispielsweise bei einem Unfall des Kraftfahrzeugs, von welchem im Anschluss an den Unfall der Notruf ausgeht, zu einem durch das Kraftfahrzeug verursachten Stau kommen kann, wenn das Kraftfahrzeug an Ort und Stelle verbleibt. Gelangt das noch fahrtüchtige Kraftfahrzeug hingegen zu einem Treffpunkt, an welchem das Kraftfahrzeug ohne Gefahr und insbesondere ohne Staugefahr abgestellt werden kann, so kann das Rettungsfahrzeug besonders rasch zu diesem Treffpunkt oder Ziel gelangen. Entsprechend ist für das den Notruf sendende Kraftfahrzeug beziehungsweise dessen Insassen besonders rasch Hilfe von Einsatzkräften erhältlich, welche mit dem Rettungsfahrzeug zu dem Treffpunkt gelangen. Es ergibt sich also in vielen Fällen eine deutlich verkürzte Zeit, bis Rettungskräfte Hilfe leisten können.

Vorliegend ist der Einfachheit halber von einem Rettungsfahrzeug die Rede. Es kann jedoch ebenso eine Mehrzahl von Rettungsfahrzeugen innerhalb der zweiten Zeitspanne auf der entsprechenden Route zu dem Ziel gelangen.

Als vorteilhaft hat sich gezeigt, wenn die Recheneinrichtung basierend auf Kartendaten und/oder basierend auf von weiteren Kraftfahrzeugen zur Verfügung gestellten Daten eine Mehrzahl möglicher Ziele ermittelt und aus den möglichen Zielen das von dem Kraftfahrzeug und dem Rettungsfahrzeug anzusteuernde Ziel auswählt. Anhand von Kartendaten lassen sich nämlich mögliche Ziele in Form von als sicher eingestuften Treffpunkten wie etwa öffentliche Parkplätze, Raststätten und dergleichen besonders leicht ausfindig machen.

Erfindungsgemäss werden Schwarmdaten bei der Auswahl des anzusteuernden Ziels berücksichtigt also Daten, welche von weiteren Kraftfahrzeugen beispielsweise einer Datenbank zur Verfügung gestellt werden und durch Zugriff der Recheneinrichtung auf die Datenbank ausgewertet werden. Beispielsweise kann ein möglicher Treffpunkt in Anbetracht des aktuellen Verkehrsaufkommens als sicheres Ziel ausgemacht werden. Derselbe Treffpunkt kann bei höherem Verkehrsaufkommen hingegen als unfallträchtiger eingestuft werden. Durch das Berücksichtigen der Schwarmdaten können also mit besonders hoher Verlässlichkeit sichere Ziele in der Umgebung des den Notruf sendenden Kraftfahrzeugs ausgemacht werden.

Besonders einfach lässt sich der Rechenaufwand der Recheneinrichtung begrenzen, wenn die Recheneinrichtung eine Mehrzahl möglicher Ziele und/oder eine Mehrzahl möglicher Rettungsfahrzeuge in Abhängigkeit von einer Entfernung der Ziele und/oder der Rettungsfahrzeuge von dem Kraftfahrzeug ermittelt. Es brauchen dann nämlich nur für mögliche Treffpunkte und Rettungsfahrzeuge Routenberechnungen durchgeführt zu werden, welche sich in der Nähe des Kraftfahrzeugs befinden.

Von einer Sendeeinrichtung der Zentrale können Daten, welche eine geographische Position des Ziels angeben, einerseits einem Navigationssystem des Kraftfahrzeugs und andererseits einem Navigationssystem des Rettungsfahrzeugs übermittelt werden. So kann besonders einfach dafür gesorgt werden, dass sowohl das Kraftfahrzeug als auch das Rettungsfahrzeug unter Nutzung des jeweiligen Navigationssystems rasch zu dem gemeinsamen Ziel beziehungsweise Treffpunkt gelangen können. Entsprechend steht die Hilfe für Insassen des den Notruf sendenden Kraftfahrzeugs besonders rasch zur Verfügung.

Dies gilt insbesondere, wenn von der Sendeeinrichtung der Zentrale zusätzlich oder alternativ Daten einerseits dem Navigationssystem des Kraftfahrzeugs und andererseits dem Navigationssystem des Rettungsfahrzeugs übermittelt werden, welche die Route von dem Kraftfahrzeug zu dem Ziel und die Route von dem Rettungsfahrzeug zu dem Ziel angeben. Dann brauchen nämlich die Navigationssysteme des Kraftfahrzeugs und des Rettungsfahrzeugs keine eigene Berechnung mehr durchzuführen, sondern die Routeninformation steht unmittelbar für die Navigationssysteme des Kraftfahrzeugs einerseits und des Rettungsfahrzeugs andererseits zur Verfügung. Auch so kann wertvolle Zeit gewonnen werden.

Dies gilt umso mehr, wenn die Recheneinrichtung der Zentrale, bei welcher es sich insbesondere um eine Notrufzentrale handeln kann, eine höhere Rechenleistung aufweist als die jeweiligen Recheneinheiten oder Prozessoren der Navigationssysteme.

Bevorzugt überprüft die Recheneinrichtung während sich das Kraftfahrzeug und das Rettungsfahrzeug zu dem Ziel begeben, ob mindestens eine beim Auswählen des Ziels getroffene Annahme weiterhin zutreffend ist. Beim Feststellen einer Abweichung von der wenigstens einen Annahme ändert die Recheneinrichtung die Route des Kraftfahrzeugs und/oder des Rettungsfahrzeugs zu dem Ziel. Zusätzlich oder alternativ kann die Recheneinrichtung das Ziel ändern, falls eine solche Abweichung festgestellt wird. Auf diese Weise kann sich ändernden Gegebenheiten besonders gut Rechnung getragen werden, etwa wenn sich die Zeitspanne zum Erreichen des Ziels aufgrund des Verkehrsaufkommens oder eines Unfalls ändert und somit ein anderes Ziel nun rascher erreichbar wird. Eine derartige Überprüfung kann durch die Recheneinrichtung insbesondere in periodischen Abständen vorgenommen werden.

Beim Überprüfen kann die Recheneinrichtung etwa auf Verkehrsinformationen zurückgreifen und/oder auf Daten, welche von weiteren Kraftfahrzeugen zur Verfügung gestellt werden oder worden sind, also auf Schwarmdaten. So können besonders rasch Anpassungen der Routen und/oder des Ziels vorgenommen werden.

Als weiter vorteilhaft hat sich gezeigt, wenn die Recheneinrichtung beim Ermitteln der ersten Zeitspanne und der zweiten Zeitspanne Daten berücksichtigt, welche von weiteren Kraftfahrzeugen und/oder von einer Verkehrszentrale zur Verfügung gestellt werden. In der Verkehrszentrale können nämlich insbesondere die Ergebnisse eine Überwachung der Verkehrssituation an ausgewählten Stellen zur Verfügung stehen, wie sie beispielsweise zur Steuerung von Wechselverkehrszeichen genutzt werden. Durch Auswertung der entsprechenden Daten der Verkehrszentrale und/oder durch Auswertung der Schwarmdaten können die erste Zeitspanne und die zweite Zeitspanne besonders realitätsnah berechnet werden.

Hierbei hat es sich als vorteilhaft gezeigt, wenn die Recheneinrichtung aus den Daten ein aktuelles Verkehrsaufkommen bestimmt. Zusätzlich oder alternativ kann die Recheneinrichtung aus den Daten eine in Abhängigkeit vom Wochentag und/oder der Uhrzeit zu erwartende Veränderung des Verkehrsaufkommens bestimmen. So können beispielsweise Stoßzeiten berücksichtigt werden, wie sie etwa im Zeitraum um einen Schichtwechsel eines entsprechend großen Betriebs beziehungsweise im morgendlichen und abendlichen Berufsverkehr auftreten.

Einer besonders genauen Ermittlung der Zeitspannen ist es des Weiteren zuträglich, wenn die Recheneinrichtung aus den Daten eine Schaltung von Lichtzeichenanlagen auf der Route des Kraftfahrzeugs und des Rettungsfahrzeugs zu dem Ziel bestimmt.

Bevorzugt wird des Weiteren eine Streckenbeschaffenheit auf der Route des Kraftfahrzeugs und/oder des Rettungsfahrzeugs zu dem Ziel berücksichtigt. So kann es beispielsweise im Winter eine Rolle spielen, ob eine erste Route von Schnee frei geräumt ist und eine zweite Route demgegenüber nicht geräumt ist. Auch ein Berücksichtigen dieses Parameters ist somit einem Minimieren der Summe der beiden Zeitspannen zuträglich.

Als weiter vorteilhaft hat es sich gezeigt, wenn die Recheneinrichtung aus den Daten ein Vorliegen wenigstens einer Geschwindigkeitsbegrenzung auf der Route des Kraftfahrzeugs und/oder des Rettungsfahrzeugs zu dem Ziel bestimmt. Auch dieser Parameter hat nämlich einen Einfluss auf die Länge der jeweiligen Zeitspanne.

Des Weiteren bestimmt die Recheneinrichtung aus den Daten eine Möglichkeit, unter Beibehaltung einer sicheren Fahrweise des Kraftfahrzeugs beziehungsweise des Rettungsfahrzeugs wenigstens eine Geschwindigkeitsbegrenzung auf der Route des Kraftfahrzeugs beziehungsweise des Rettungsfahrzeugs zu dem Ziel zu übertreten. So kann beispielsweise auf einer Route eine Geschwindigkeitsbegrenzung aus Lärmschutzgründen vorgesehen sein. Auf dieser Route kann jedoch insbesondere das Rettungsfahrzeug die Geschwindigkeitsbegrenzung nicht einhalten und trotzdem sicher fahren. Durch das Berücksichtigen einer derartigen Möglichkeit kann das Ziel besonders rasch erreicht werden.

Bevorzugt wird auf ein manuelles Auslösen und/oder auf ein automatisches Auslösen des Notrufs hin in Erfahrung gebracht, ob ein Fahrer des Kraftfahrzeugs ansprechbar ist. So kann beim manuellen Auslösen des Notrufs durch einen Insassen des Kraftfahrzeugs zunächst festgestellt werden, ob tatsächlich Hilfe notwendig ist. Falls dies der Fall ist, kann in Erfahrung gebracht werden, ob der Fahrer des Kraftfahrzeugs fahrtüchtig ist. Ist dies der Fall, so besteht für den Fahrer die Möglichkeit, dass dieser das Kraftfahrzeug selber zu dem Ziel hin steuert.

Wird demgegenüber etwa auf das automatische Auslösen des Notrufs hin in Erfahrung gebracht, dass der Fahrer des Kraftfahrzeugs nicht ansprechbar oder nicht fahrtüchtig ist, so kann dies bei der Auswahl des Ziels berücksichtigt werden.

Bevorzugt wird auf das manuelle Auslösen des Notrufs hin bei fehlender Fahrtüchtigkeit des Fahrers eine autonome Fahrfunktion des Kraftfahrzeugs aktiviert und das Kraftfahrzeug autonom zu dem Ziel gefahren. Es sind bei diesem autonomen Fahren entsprechend keine Eingriffe des Fahrers vonnöten, um das Kraftfahrzeug zu dem Ziel zu bewegen.

Wird hingegen auf das manuelle Auslösen des Notrufs hin festgestellt, dass der Fahrer nicht ansprechbar ist, so wird bevorzugt keine autonome Fahrfunktion des Kraftfahrzeugs aktiviert. Denn es kann dann davon ausgegangen werden, dass beispielsweise ein Kind oder ein sonstiger Insasse des Kraftfahrzeugs den Notruf versehentlich manuell ausgelöst hat. In einem solchen Fall ist es nicht zweckmäßig, das Kraftfahrzeug selbsttätig zu dem Ziel zu fahren. Dasselbe gilt, wenn nach dem manuellen Auslösen des Notrufs die Anfrage an den Fahrer des Kraftfahrzeugs ergibt, dass keine Hilfe notwendig ist.

Bevorzugt wird des Weiteren auf das automatische Auslösen des Notrufs hin bei fehlender Fahrtüchtigkeit des Fahrers und/oder bei fehlender Ansprechbarkeit des Fahrers die autonome Fahrfunktion des Kraftfahrzeugs aktiviert und das Kraftfahrzeug autonom zu dem Ziel gefahren. Denn so kann gewährleistet werden, dass das Ziel besonders sicher und zuverlässig erreicht wird und zudem rasch Hilfe für den fahruntüchtigen oder nicht ansprechbaren Fahrer beziehungsweise andere Insassen des Kraftfahrzeugs zur Verfügung steht.

Bevorzugt wird während der Fahrt des Kraftfahrzeugs zu dem Ziel mittels wenigstens einer Überwachungseinrichtung des Kraftfahrzeugs überwacht, ob der Fahrer des Kraftfahrzeugs weiterhin fahrtüchtig ist. Bei einer Beeinträchtigung der Fahrtüchtigkeit des Fahrers kann wenigstens ein Warnsignal ausgegeben werden. Zusätzlich oder alternativ kann bei einer Beeinträchtigung der Fahrtüchtigkeit eine autonome Fahrfunktion des Kraftfahrzeugs aktiviert und das Kraftfahrzeug autonom zu dem Ziel gefahren werden. So kann selbst in einem Fall, in welchem der Fahrer das Ziel zunächst selbstständig ansteuern möchte, jedoch aufgrund von Müdigkeit oder nervlicher Anspannung (beispielsweise bei Vorliegen eines Schockzustands) hierfür nicht mehr in ausreichendem Maße in der Lage ist, das Kraftfahrzeug sicher zu dem Ziel gelangen.

Das erfindungsgemäße System zum Ermitteln einer Route von einem Aufenthaltsort eines Kraftfahrzeugs zu einem Ziel umfasst eine Steuerungseinrichtung des Kraftfahrzeugs. Die Steuerungseinrichtung ist dazu ausgebildet, einen Notruf an einen Empfänger einer Zentrale des Systems zu übermitteln. Eine Recheneinrichtung der Zentrale ist dazu ausgebildet, die Route zu dem Ziel zu ermitteln. Hierbei ist die Recheneinrichtung dazu ausgebildet, bei einem Auswählen des Ziels eine erste Zeitspanne zu berücksichtigen, welche das Kraftfahrzeug zum Zurücklegen der Route benötigt und eine zweite Zeitspanne, welche ein Rettungsfahrzeug zum Erreichen des Ziels benötigt. Des Weiteren ist die Recheneinrichtung dazu ausgebildet, das Ziel derart auszuwählen, dass eine Summe der beiden Zeitspannen minimal ist. Hierbei ist die Recheneinrichtung dazu ausgebildet, beim Ermitteln der ersten Zeitspanne und der zweiten Zeitspanne von weiteren Kraftfahrzeugen zur Verfügung gestellte Daten zu berücksichtigen, wobei die Recheneinrichtung dazu ausgebildet ist, aus den Daten eine Schaltung von Lichtzeichenanlagen auf der Route des Kraftfahrzeugs und/oder des Rettungsfahrzeugs zu dem Ziel und/oder eine Möglichkeit, unter Beibehaltung einer sicheren Fahrweise des Kraftfahrzeugs und/oder des Rettungsfahrzeugs wenigstens eine Geschwindigkeitsbegrenzung auf der Route des Kraftfahrzeugs und/ oder des Rettungsfahrzeugs zu dem Ziel zu übertreten, zu bestimmen.

Die für das erfindungsgemäße Verfahren beschriebenen Vorteile und bevorzugten Ausführungsformen gelten auch für das erfindungsgemäße System und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind. Es sind somit auch Ausführungen und Merkmalskombinationen als offenbart anzusehen, die nicht alle Merkmale eines ursprünglich formulierten unabhängigen Anspruchs aufweisen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisch eine Situation, in welcher ein Kraftfahrzeug, welches einen Notruf ausgesendet hat, und ein Rettungsfahrzeug zu einem gemeinsamen Treffpunkt geleitet werden;
- Fig. 2: ein Ablaufdiagramm, anhand dessen sich die Nutzung autonomer Fahrfunktionen des Kraftfahrzeugs zum Erreichen des gemeinsamen Treffpunkts veranschaulichen lässt; und
- Fig. 3: schematisch die Übertragung von die geografische Position des Kraftfahrzeugs umfassenden Daten zu einer Zentrale.

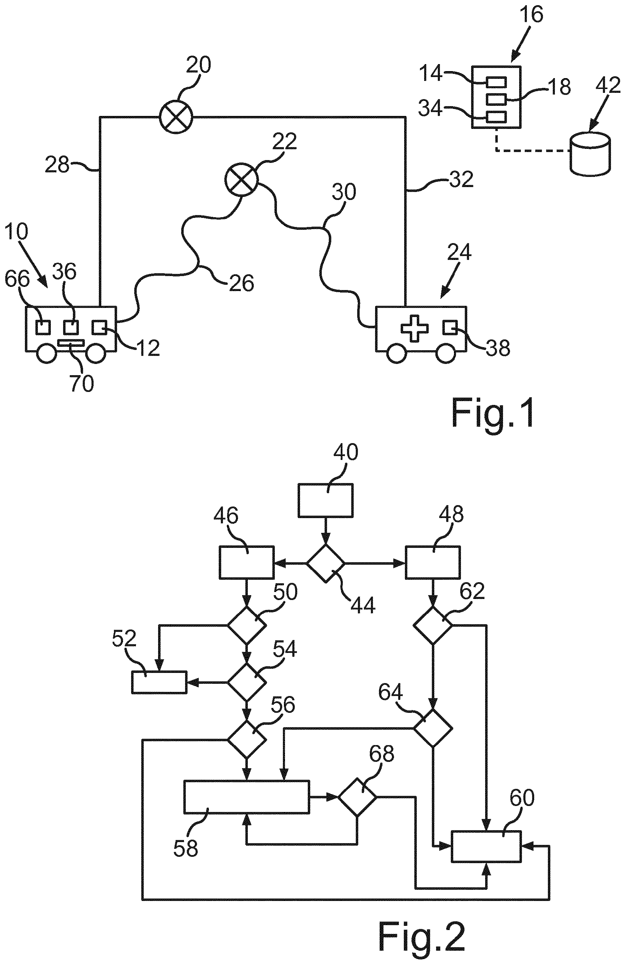

In Fig. 1 sind schematisch Komponenten eines Systems gezeigt, mittels welchem sich eine Rettungszeit beziehungsweise ein Rettungsweg bei einem manuellen oder automatischen Notruf optimieren lassen. Dementsprechend weist ein Kraftfahrzeug 10 eine Steuerungseinrichtung etwa in Form eines Steuergeräts 12 auf. Auf ein manuelles oder automatisches Auslösen eines Notrufs hin baut das Steuergerät 12 eine Verbindung zu einer Empfangseinrichtung beziehungsweise einem Empfänger 14 einer Zentrale 16 auf, welche beispielsweise als Notrufzentrale oder Callcenter mit einem entsprechenden Server ausgebildet ist und eine Recheneinrichtung 18 umfasst.

Mit dem Notruf wird die geographische Position des Kraftfahrzeugs 10, also ein den Aufenthaltsort des Kraftfahrzeugs 10 angebendes Datenpaket an den Empfänger 14 übermittelt. Die Übertragung der Geoposition des Kraftfahrzeugs 10 kann über SMS erfolgen oder über ein Inband-Modem, also über einen Datenkanal, welcher sowohl zum Übermitteln von Sprachnachrichten als auch im Übermitteln von Daten genutzt werden kann.

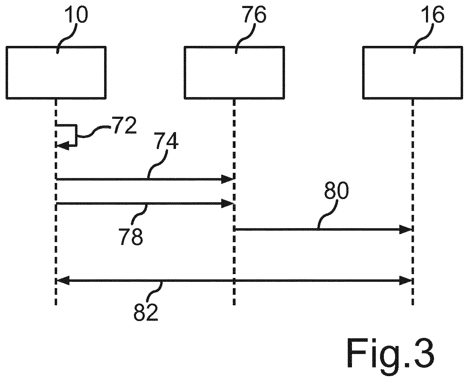

Fig. 3 veranschaulicht eine Möglichkeit der Übertragung der geografischen Position des Kraftfahrzeugs 10 an den Empfänger 14 der Zentrale 16 über das Inband-Modem. Nach einem Auslösen 72 des Notrufs, welcher auch als eCall bezeichnet wird, kann zunächst eine Sprachverbindung 74 zu einem Server 76 aufgebaut werden, welcher auch als Backend bezeichnet wird. Der Sprachkanal für die Sprachverbindung 74 kann nach dem Aufbau der Verbindung zu einer Inband-Datenübertragung 78 zu dem Server 76 genutzt werden. Von dem Server 76 erfolgt dann eine Datenübertragung 80 zum Empfänger 14 der Zentrale 16. Des Weiteren kann jedoch auch über eine Sprachverbindung 82 vom Kraftfahrzeug 10 aus mit der Zentrale 16 und umgekehrt kommuniziert werden. Berechnungen, welche eine optimale Route 28, 32 zu einem Ziel 20 umfassen (vergleiche Fig. 1), finden auf der (in Fig. 3 nicht gezeigten) Recheneinrichtung 18 der Zentrale 16 statt, welche beispielsweise einen Server und Datenbanken umfassen kann. Die Ergebnisse der Berechnung werden dann über den Server 76 an das Kraftfahrzeug 10 geschickt.

Zusätzlich oder alternativ kann die Übertragung der Geoposition auch mittels einer IP-Kommunikation über das Backend beziehungsweise den Server 76 erfolgen. Es kann also auch ein Computernetzwerk zum Einsatz kommen, bei welchem die Datenübermittlung insbesondere nach dem Internetstandard erfolgen kann.

In der in Fig. 1 gezeigten Situation wird also ein manueller oder automatischer Notruf getriggert. Der Notruf geht in der Zentrale 16 ein, und hierbei wird die geographische Position des Kraftfahrzeugs 10 übermittelt. Nach dem Eingang des Notrufs werden in der (Notruf-)Zentrale 16 beziehungsweise im Callcenter mittels der Recheneinrichtung 18 der Zentrale 16 mögliche, als sicher eingestufte Treffpunkte oder Ziele 20, 22 in der Umgebung des Kraftfahrzeugs 10 gesucht. Bei diesen Zielen 20, 22 kann es sich beispielsweise um öffentliche Parkplätze, Raststätten oder dergleichen handeln.

Beim Ermitteln der möglichen Ziele 20, 22 oder Treffpunkte im Umkreis des Kraftfahrzeugs 10 wird zudem berücksichtigt, ob sich in der Nähe des Kraftfahrzeugs 10 beziehungsweise der möglichen Ziele 20, 22 Rettungskräfte beziehungsweise Rettungsfahrzeuge 24 befinden. In Fig. 1 ist beispielhaft lediglich ein Rettungsfahrzeug 24 gezeigt, welches sich in der Nähe des Kraftfahrzeugs 10 befindet. Von der Recheneinrichtung 18 werden also zunächst sichere Treffpunkte beziehungsweise Ziele 20, 22 im Umkreis des Kraftfahrzeugs 10 und im Umkreis von sich in der Nähe des Kraftfahrzeugs 10 befindenden Rettungskräften beziehungsweise Rettungsfahrzeugen 24 bestimmt.

Anschließend werden jeweilige beziehungsweise verschiedene Routen von dem Kraftfahrzeug 10 zu den Zielen 20, 22 und von dem Rettungsfahrzeug 24 zu den Zielen 20, 22 hin berechnet. Beispielsweise führt eine erste Route 26 von dem Kraftfahrzeug 10 zu dem Ziel 22, welches sich in größerer Nähe zu dem Kraftfahrzeug 10 befindet als das Ziel 20. Entsprechend führt eine zweite Route 28 von dem Kraftfahrzeug 10 zu dem weiter entfernten Ziel 20.

Dasselbe gilt für eine streckenmäßig kürzere Route 30 von dem Rettungsfahrzeug 24 zu dem Ziel 22 und für eine streckenmäßig längere Route 32 von dem Rettungsfahrzeug 24 zu dem Ziel 20. Die Recheneinrichtung 18 ermittelt jedoch die jeweiligen Zeitspannen, welche das Kraftfahrzeug zum Zurücklegen der streckenmäßig kürzeren Route 26 einerseits und der streckenmäßig längeren Route 28 andererseits benötigt. Des Weiteren ermittelt die Recheneinrichtung 18 die jeweiligen Zeitspannen, welche das Rettungsfahrzeug 24 zum Zurücklegen sowohl der streckenmäßig kürzeren Route 30 als auch der streckenmäßig längeren Route 32 benötigt.

Beim Auswählen des Ziels 20, welches als Treffpunkt für das Kraftfahrzeug 10 mit dem Rettungsfahrzeug 24 dienen soll, werden von der Recheneinrichtung 18 die Routen 26, 28, 30, 32 hinsichtlich der Anfahrtszeit optimiert. Der Treffpunkt beziehungsweise das Ziel 20, welches insgesamt die kürzeste Anfahrtszeit in Anspruch nimmt, wird von der Recheneinrichtung 18 ausgewählt. Vorliegend kann beispielsweise das Kraftfahrzeug 10 auf der streckenmäßig längeren Route 28 schneller zu dem Ziel 20 gelangen, als zu dem näheren Ziel 22 über die kürzere Route 26. Ebenso kann das Rettungsfahrzeug 24 über die streckenmäßig längere Route 32 schneller zu dem Ziel 20 gelangen, als über die kürzere Route 30 zu dem näher liegenden Ziel 22. Vorliegend wird also das Ziel 20 als der gemeinsame Treffpunkt ausgewählt. Die Route 28, 32 zu sicheren Treffpunkten wird also auf die minimal mögliche Anfahrtszeit sowohl des Kraftfahrzeugs 10 als auch des Rettungsfahrzeugs 24 beziehungsweise der Rettungskraft hin optimiert.

Eine Sendeeinrichtung 34 der Zentrale 16 übermittelt daraufhin an ein Navigationssystem 36 des Kraftfahrzeugs 10 einerseits und an ein Navigationssystem 38 des Rettungsfahrzeugs 24 andererseits die Position des Treffpunkts beziehungsweise Ziels 20 und die Routeninformation betreffend die Route 28 beziehungsweise die Route 32. Die Position des Treffpunkts und die Routeninformationen werden also an das Kraftfahrzeug 10 und an die Rettungskraft beziehungsweise das Rettungsfahrzeug 24 übermittelt. Daraufhin begeben sich das Kraftfahrzeug 10 und das Rettungsfahrzeug 24 zu dem Treffpunkt beziehungsweise Ziel 20.

Anhand von Fig. 2 soll insbesondere die Nutzung automatisierter beziehungsweise autonomer Fahrfunktionen 70 (vergleiche Fig. 1) des den Notruf sendenden Kraftfahrzeugs 10 beim Ansteuern des Treffpunkts beziehungsweise Ziels 20 erläutert werden.

So wird in einem ersten Schritt 40 der manuelle oder automatische Notruf des Kraftfahrzeugs 10 getriggert beziehungsweise ausgelöst. Das Notruf-Steuergerät 12 des Kraftfahrzeugs 10 baut daraufhin die Verbindung zu der Zentrale 16 beziehungsweise dem Callcenter auf und übermittelt unter anderem die geographische Position beziehungsweise den Aufenthaltsort des Kraftfahrzeugs 10. Das Steuergerät 12 kann hierbei insbesondere mit einem Gateway ausgestattet sein.

Vor dem Übermitteln der Position des Ziels 20 an das Kraftfahrzeug 10 und das Rettungsfahrzeug 24 werden die sicheren Treffpunkte beziehungsweise Ziele 20, 22 beispielsweise aus Karteninformationen und vorhandenen Schwarmdaten im Umkreis des Kraftfahrzeugs 10 und des Rettungsfahrzeugs 24 beziehungsweise der Rettungskräfte gefiltert. Beispielsweise kann die Recheneinrichtung 18 auf eine Datenbank 42 zugreifen, in welcher gesammelte Schwarmdaten als Basis für die Berechnung der Routen 26, 28, 30, 32 zur Verfügung stehen.

Über eine Sprachverbindung zwischen der Zentrale 16 und dem Kraftfahrzeug 10 kann dann zunächst festgestellt werden, ob die Person beziehungsweise der Fahrer in dem Kraftfahrzeug 10 ansprechbar ist. Hierbei sind unterschiedliche Fälle beziehungsweise Szenarien denkbar. So kann in einem Block 44 (vergleiche Fig. 2) zunächst ermittelt werden, ob ein manueller Notruf 46 oder ein automatischer Notruf 48 ausgelöst wurde.

Im Falle des manuellen Notrufs 46 wird in einem ersten Schritt 50 zunächst geprüft, ob der Fahrer ansprechbar ist. Ist dies nicht der Fall, so geht das Verfahren zu einem Block 52, in welchem nichts unternommen wird. So kann sichergestellt werden, dass nicht auf eine versehentliche Fehlauslösung hin das Rettungsfahrzeug 24 auf den Weg gebracht wird. Ist der Fahrer hingegen ansprechbar, so wird in einem Schritt 54 angefragt, ob Hilfe notwendig ist. Ist dies nicht der Fall, wird nichts unternommen (Block 52). Ist hingegen eine Hilfe durch Einsatzkräfte des Rettungsfahrzeugs 24 notwendig, wird in einem nächsten Schritt 56 angefragt, ob die Person beziehungsweise der Fahrer des Kraftfahrzeugs 10 fahrtüchtig ist. Ist der Fahrer fahrtüchtig, so wird die jeweils optimierte Route 28, 32 zum Treffpunkt beziehungsweise Ziel 20 an das Rettungsfahrzeug 24 und das Kraftfahrzeug 10 übertragen, und der Fahrer kann sich für ein selbstständiges Fahren 58 zum Treffpunkt beziehungsweise Ziel 20 entscheiden.

Ist der Fahrer hingegen nicht fahrtüchtig, so erfolgt in einem in Fig. 2 dargestellten weiteren Block ein Aktivieren 60 der autonomen Fahrfunktion 70 des Kraftfahrzeugs 10. Demgemäß sorgen entsprechende Einrichtungen des Kraftfahrzeugs 10, welche in Fig. 1 nicht im Detail gezeigt sind, für das selbstständige, autonome Fahren des Kraftfahrzeugs 10 zu dem Ziel 20. Das Aktivieren 60 der autonomen Fahrfunktion 70 erfolgt auch, wenn der fahrtüchtige Fahrer sich im Anschluss an den Schritt 56 dafür entscheidet, dass er nicht selbstständig zu dem Ziel 20 fahren möchte. Der Fahrer kann insbesondere die autonome Fahrfunktion 70 selber aktivieren.

Im Falle des automatischen Notrufs 48 wird ebenfalls in einem Schritt 62 zunächst geprüft, ob der Fahrer des Kraftfahrzeugs 10 ansprechbar ist. Ist dies nicht der Fall, so erfolgt das Aktivieren 60 der autonomen Fahrfunktion 70. Ist der Fahrer hingegen ansprechbar, wird in einem nachfolgenden Schritt 64 angefragt, ob der Fahrer (oder ein weiterer Insasse des Kraftfahrzeugs 10) fahrtüchtig ist. Ist der Fahrer (oder der weitere Insasse) nicht fahrtüchtig, erfolgt wiederum das Aktivieren 60 autonomen Fahrfunktion 70. Ist der Fahrer hingegen fahrtüchtig, so kann er sich für das selbstständige Fahren 58 entscheiden oder das autonome Fahren aktivieren. Auch beim Aktivieren der autonomen beziehungsweise automatisierten Fahrfunktion 70 wird die jeweils optimierte Route 28, 32 zum Treffpunkt beziehungsweise Ziel 20 an das Rettungsfahrzeug 24 und das Kraftfahrzeug 10 übertragen. Die automatisierten Fahrfunktionen 70 übernehmen dann das Kraftfahrzeug 10 und fahren dieses zum Treffpunkt beziehungsweise Ziel 20.

Falls sich der Fahrer des Kraftfahrzeugs 10 für das selbständige Fahren 58 entschieden hat, so wird der Fahrer durch eine Überwachungseinrichtung etwa in Form von Sensoren 66 (vergleiche Fig. 1) auf seine Fahrtüchtigkeit überwacht. Dies geschieht in einem Schritt 68 in Fig. 2. Erkennt das System beziehungsweise die Überwachungseinrichtung eine negative Veränderung der Fahrtüchtigkeit des Fahrers, so werden Warnsignale ausgegeben. Dies ist beispielsweise der Fall, wenn mittels der Sensoren 66 etwa in Form einer Kamera und/oder einer Blickerfassungseinrichtung eine Müdigkeit des Fahrers erkannt wird. Ergibt das Überprüfen im Schritt 68, dass der Fahrer weiterhin zum selbständigen Fahren 58 in der Lage ist, so fährt der Fahrer weiterhin das Kraftfahrzeug 10 zu dem Ziel 20. Ist der Fahrer hingegen nicht mehr in der Lage, das Kraftfahrzeug 10 selbst zu steuern, so übernimmt die autonome Fahrfunktion 70, und das Kraftfahrzeug 10 wird ohne Eingriffe des Fahrers zu dem Treffpunkt beziehungsweise Ziel 20 gefahren. Hierbei bleibt bevorzugt eine Sprachverbindung zu der Zentrale 16 bestehen, zumindest bis das Ziel 20 erreicht und auch das Rettungsfahrzeug 24 am Ziel 20 angelangt ist.

Unabhängig davon, ob das Kraftfahrzeug 10 durch den Fahrer oder mittels der autonomen Fahrfunktion 70 zu dem Ziel 20 gefahren wird, wird in der Zentrale 16 die auf die Zeit hin optimierte Route 28, 32 zu dem als sicher eingestuften Treffpunkt beziehungsweise Ziel 20 berechnet. Hierbei können durch Zugriff auf die Datenbank 42 gesammelte Schwarmdaten als Basis für die Berechnung der Routen 26, 28, 30, 32 verwendet werden.

Parameter, welche die Anfahrtszeit, also die Zeitspanne zum Zurücklegen der jeweiligen Route 26, 28, 30, 32 beeinflussen beziehungsweise beeinträchtigen und aus den Schwarmdaten bezogen werden können, umfassen beispielsweise das aktuelle Verkehrsaufkommen, das Verkehrsaufkommen zu Stoßzeiten (etwa bei einem Schichtwechsel), Ampelschaltungen, eine Streckenbeschaffenheit auf der jeweiligen Route 26, 28, 30, 32 und dergleichen. Beispielsweise spielt es eine Rolle, ob die Route 26, 28, 30, 32 im Winter geräumt ist oder nicht. Des Weiteren können anhand von Karteninformationen und/oder über die in der Datenbank 42 verfügbaren Schwarmdaten Informationen zu Geschwindigkeitsbegrenzungen auf den jeweiligen Routen 26, 28, 30, 32 für die Ermittlung der jeweils zum Zurücklegen derselben benötigten Zeitspannen berücksichtigt werden. Des Weiteren kann aus den Schwarmdaten und/oder Kartendaten die Möglichkeit bestimmt werden, Geschwindigkeitsbegrenzungen auf der jeweiligen Route 26, 28, 30, 32 nicht einzuhalten und trotzdem sicher zu fahren.

Bevorzugt wird sowohl beim selbständigen Fahren 58 hin zu dem Ziel 20 als auch beim autonomen Fahren, also auf das Aktivieren 60 der autonomen Fahrfunktion 70 hin, die Route 28, 32 im jeweiligen Navigationssystem 36, 38 des Kraftfahrzeugs 10 beziehungsweise des Rettungsfahrzeug 24 angezeigt. So ist beispielsweise auf einer Anzeige des Navigationssystems 36 des Kraftfahrzeugs 10 die aktuelle Position der Rettungskraft beziehungsweise des Rettungsfahrzeugs 24 dargestellt und/oder Daten wie etwa die Zeit, bis das Rettungsfahrzeug 24 am Ziel 20 eintrifft. Für den Fahrer des Kraftfahrzeugs 10 ist es nämlich beruhigend, wenn er über die Zeit bis zum Eintreffen des Rettungsfahrzeugs 24 an dem Treffpunkt jederzeit informiert ist. Eine derartige Beruhigung ist daher im Hinblick auf den Gesundheitszustand des Fahrers des Kraftfahrzeugs 10 vorteilhaft. Des Weiteren wird bevorzugt im Navigationssystem 36 des Kraftfahrzeugs 10 die Zeit bis zum Eintreffen des Kraftfahrzeugs 10 selber an dem Treffpunkt beziehungsweise Ziel 20 angezeigt.

Bevorzugt wird im Hintergrund zyklisch von der Recheneinrichtung 18 die jeweils optimale Route insbesondere auf Basis der Schwarmdaten berechnet. Ergibt sich hierbei, dass eine Änderung der gewählten Route 28, 32 erforderlich oder sinnvoll ist, so werden die entsprechenden Routeninformationen an das Navigationssystem 36 des Kraftfahrzeugs 10 beziehungsweise an das Navigationssystem 38 des Rettungsfahrzeugs 24 übertragen. Bei dieser von der Recheneinrichtung 18 durchgeführten Berechnung kann es auch dazu kommen, dass ein neuer Treffpunkt beziehungsweise ein neues Ziel gewählt wird. Des Weiteren kann, beispielsweise wenn das Kraftfahrzeug 10 und/oder das Rettungsfahrzeug 24 sich deutlich schneller als erwartet auf der jeweiligen Route 28, 32 bewegen, dies als Trigger beziehungsweise Auslöser zur Neuberechnung einer optimalen Route verwendet werden.

## Patentansprüche

1. Verfahren zum Ermitteln einer Route (28) von einem Aufenthaltsort eines Kraftfahrzeugs (10) zu einem Ziel (20), bei welchem eine Steuerungseinrichtung (12) des Kraftfahrzeugs (10) einen Notruf an einen Empfänger (14) einer Zentrale (16) übermittelt, und bei welchem eine Recheneinrichtung (18) der Zentrale (16) die Route (28) zu dem Ziel (20) ermittelt,
wobei die Recheneinrichtung (18) der Zentrale (16) bei einem Auswählen des Ziels (20) eine erste Zeitspanne berücksichtigt, welche das Kraftfahrzeug (10) zum Zurücklegen der Route (28) benötigt,
und wobei die Recheneinrichtung (18) eine zweite Zeitspanne berücksichtigt, welche ein Rettungsfahrzeug (24) zum Erreichen des Ziels (20) benötigt, wobei die Recheneinrichtung (18) das Ziel (20) derart auswählt, dass eine Summe der beiden Zeitspannen minimal ist,
**dadurch gekennzeichnet, dass**
die Recheneinrichtung (18) beim Ermitteln der ersten Zeitspanne und der zweiten Zeitspanne von weiteren Kraftfahrzeugen zur Verfügung gestellte Daten berücksichtigt, wobei
die Recheneinrichtung (18) aus den Daten
- eine Schaltung von Lichtzeichenanlagen auf der Route (28, 32) des Kraftfahrzeugs (10) und/oder des Rettungsfahrzeugs (24) zu dem Ziel (20) und/oder
- eine Möglichkeit, unter Beibehaltung einer sicheren Fahrweise des Kraftfahrzeugs (10) und/oder des Rettungsfahrzeugs (24) wenigstens eine Geschwindigkeitsbegrenzung auf der Route (28, 32) des Kraftfahrzeugs (10) und/oder des Rettungsfahrzeugs (24) zu dem Ziel (20) zu übertreten,
bestimmt.

2. Verfahren nach Anspruch 1,
**dadurch gekennzeichnet, dass**
die Recheneinrichtung (18) basierend auf Kartendaten und/oder basierend auf von weiteren Kraftfahrzeugen zur Verfügung gestellten Daten eine Mehrzahl möglicher Ziele (20, 22) ermittelt und aus den möglichen Zielen (20, 22) das von dem Kraftfahrzeug (10) und dem Rettungsfahrzeug (10) anzusteuernde Ziel (20) auswählt.

3. Verfahren nach Anspruch 1 oder 2,
**dadurch gekennzeichnet, dass**
die Recheneinrichtung (18) eine Mehrzahl möglicher Ziele (20, 22) und/oder eine Mehrzahl möglicher Rettungsfahrzeuge (24) in Abhängigkeit von einer Entfernung der Ziele (20, 22) und/oder der Rettungsfahrzeuge (24) von dem Kraftfahrzeug (10) ermittelt.

4. Verfahren nach einem der Ansprüche 1 bis 3,
**dadurch gekennzeichnet, dass**
von einer Sendeeinrichtung (34) der Zentrale (16) Daten,
- welche eine geographische Position des Ziels (20) angeben, und/oder
- welche die Route (28) von dem Kraftfahrzeug (10) zu dem Ziel (20) und die Route (32) von dem Rettungsfahrzeug (24) zu dem Ziel (20) angeben,
einerseits einem Navigationssystem (36) des Kraftfahrzeugs (10) und andererseits einem Navigationssystem (38) des Rettungsfahrzeugs (24) übermittelt werden.

5. Verfahren nach einem der Ansprüche 1 bis 4,
**dadurch gekennzeichnet, dass**
die Recheneinrichtung (18), insbesondere basierend auf Verkehrsinformationen und/oder basierend auf von weiteren Kraftfahrzeugen zur Verfügung gestellten Daten, während sich das Kraftfahrzeug (10) und das Rettungsfahrzeug (24) zu dem Ziel (20) begeben überprüft, ob wenigstens eine beim Auswählen des Ziels (20) getroffene Annahme zutreffend ist, und beim Feststellen einer Abweichung von der wenigstens einen Annahme die Route (28, 32) des Kraftfahrzeugs (10) und/oder des Rettungsfahrzeugs (24) zu dem Ziel (20) und/oder das Ziel (20) ändert.

6. Verfahren nach einem der Ansprüche 1 bis 5,
**dadurch gekennzeichnet, dass**
die Recheneinrichtung (18) beim Ermitteln der ersten Zeitspanne und der zweiten Zeitspanne von einer Verkehrszentrale zur Verfügung gestellte Daten berücksichtigt.

7. Verfahren nach einem der Ansprüche 1 bis 6,
**dadurch gekennzeichnet, dass**
die Recheneinrichtung (18) aus den Daten
- ein aktuelles Verkehrsaufkommen und/oder
- eine in Abhängigkeit vom Wochentag und/oder der Uhrzeit zu erwartende Veränderung des Verkehrsaufkommens und/oder
- eine Streckenbeschaffenheit auf der Route (28, 32) des Kraftfahrzeugs (10) und/oder des Rettungsfahrzeugs (24) zu dem Ziel (20) und/oder
- ein Vorliegen wenigstens einer Geschwindigkeitsbegrenzung auf der der Route (28, 32) des Kraftfahrzeugs (10) und/oder des Rettungsfahrzeugs (24) zu dem Ziel
bestimmt.

8. Verfahren nach einem der Ansprüche 1 bis 7,
**dadurch gekennzeichnet, dass**
auf ein manuelles Auslösen und/oder auf automatisches Auslösen des Notrufs hin in Erfahrung gebracht wird, ob ein Fahrer des Kraftfahrzeugs (10) ansprechbar und/oder fahrtüchtig ist.

9. Verfahren nach Anspruch 8,
**dadurch gekennzeichnet, dass**
- auf das manuelle Auslösen des Notrufs hin bei fehlender Fahrtüchtigkeit des Fahrers und
- auf das automatische Auslösen des Notrufs hin bei fehlender Fahrtüchtigkeit des Fahrers und/oder bei fehlender Ansprechbarkeit des Fahrers
eine autonome Fahrfunktion (70) des Kraftfahrzeugs (10) aktiviert und das Kraftfahrzeug (10) autonom zu dem Ziel gefahren wird.

10. Verfahren nach einem der Ansprüche 1 bis 9,
**dadurch gekennzeichnet, dass**
während der Fahrt des Kraftfahrzeugs (10) zu dem Ziel (20) mittels wenigstens einer Überwachungseinrichtung (66) des Kraftfahrzeugs (10) überwacht wird, ob ein Fahrer des Kraftfahrzeugs (10) fahrtüchtig ist, wobei bei einer Beeinträchtigung der Fahrtüchtigkeit wenigstens ein Warnsignal ausgegeben und/oder eine autonome Fahrfunktion (70) des Kraftfahrzeugs (10) aktiviert und das Kraftfahrzeug (10) autonom zu dem Ziel gefahren wird.

11. System zum Ermitteln einer Route (28) von einem Aufenthaltsort eines Kraftfahrzeugs (10) zu einem Ziel (20), mit einer Steuerungseinrichtung (12) des Kraftfahrzeugs (10), welche dazu ausgebildet ist, einen Notruf an einen Empfänger (14) einer Zentrale (16) des Systems zu übermitteln, wobei eine Recheneinrichtung (18) der Zentrale (16) dazu ausgebildet ist, die Route (28) zu dem Ziel (20) zu ermitteln,
wobei die Recheneinrichtung (18) der Zentrale (16) dazu ausgebildet ist, bei einem Auswählen des Ziels (20) eine erste Zeitspanne zu berücksichtigen, welche das Kraftfahrzeug (10) zum Zurücklegen der Route (28) benötigt,
wobei die Recheneinrichtung (18) dazu ausgebildet ist, eine zweite Zeitspanne zu berücksichtigen, welche ein Rettungsfahrzeug (24) zum Erreichen des Ziels (20) benötigt, und dazu ausgebildet ist, das Ziel (20) derart auszuwählen, dass eine Summe der beiden Zeitspannen minimal ist,
**dadurch gekennzeichnet, dass**
die Recheneinrichtung (18) dazu ausgebildet ist, beim Ermitteln der ersten Zeitspanne und der zweiten Zeitspanne von weiteren Kraftfahrzeugen zur Verfügung gestellte Daten zu berücksichtigen,
wobei die Recheneinrichtung (18) dazu ausgebildet ist, aus den Daten
- eine Schaltung von Lichtzeichenanlagen auf der Route (28, 32) des Kraftfahrzeugs (10) und/oder des Rettungsfahrzeugs (24) zu dem Ziel (20) und/oder
- eine Möglichkeit, unter Beibehaltung einer sicheren Fahrweise des Kraftfahrzeugs (10) und/oder des Rettungsfahrzeugs (24) wenigstens eine Geschwindigkeitsbegrenzung auf der Route (28, 32) des Kraftfahrzeugs (10) und/oder des Rettungsfahrzeugs (24) zu dem Ziel (20) zu übertreten,
zu bestimmen.

## Claims

1. Method for determining a route (28) from a location of a motor vehicle (10) to a destination (20) in the case of which a control device (12) of the motor vehicle (10) transmits an emergency call to a receiver (14) of a centre (16) and in the case of which a computing device (18) of the centre (16) determines the route (28) to the destination (20),
wherein the computing device (18) of the centre (16) when selecting the destination (20), takes into account a first time period which the motor vehicle (10) requires to cover the route (28), and wherein the computing device (18) takes into account a second time period which an emergency vehicle (24) requires to reach the destination (20), wherein the computing device (18) selects the destination (20) such that a sum of both time periods is minimal,
**characterised in that**
the computing device (18) when determining the first time period and the second time period takes into account data provided by additional motor vehicles, wherein the computing device (18) determines the following from the data
- switching of traffic lights on the route (28, 32) of the motor vehicle (10) and/or the emergency vehicle (24) to the destination (20) and/or
- a possibility of violating at least one speed limit on the route (28, 32) of the motor vehicle (10) and/or the emergency vehicle (24) to the destination (20) whilst continuing to safely drive the motor vehicle (10) and/or the emergency vehicle (24).

2. Method according to claim 1,
**characterised in that**
the computing device (18), based on map data and/or based on data provided by additional motor vehicles, determines a plurality of possible destinations (20, 22) and selects from the possible destinations (20, 22) the destination (20) to which the motor vehicle (10) and the emergency vehicle (10) are to drive.

3. Method according to claim 1 or 2,
**characterised in that**
the computing device (18) determines a plurality of possible destinations (20, 22) and/or a plurality of possible emergency vehicles (24) as a function of a distance of the destinations (20, 22) and/or the emergency vehicles (24) from the motor vehicle (10).

4. Method according to any one of claims 1 to 3,
**characterised in that**
data are transmitted from a transmitting device (34) of the centre (16),
- which indicate a geographic position of the destination (20), and/or
- which indicate the route (28) from the motor vehicle (10) to the destination (20) and the route (32) from the emergency vehicle (24) to the destination (20),
on the one hand to a navigation system (36) of the motor vehicle (10) and on the other hand to a navigation system (38) of the emergency vehicle (24).

5. Method according to any one of claims 1 to 4,
**characterised in that**
the computing device (18), in particular based on traffic information and/or based on data provided by additional motor vehicles, while the motor vehicle (10) and the emergency vehicle (24) proceed to the destination (20), check whether at least one assumption made when selecting the destination (20) is correct and when determining a deviation from the at least one assumption, the route (28, 32) of the motor vehicle (10) and/or the emergency vehicle (24) to the destination (20) and/or the destination (20) changes.

6. Method according to any one of claims 1 to 5,
**characterised in that**
the computing device (18), when determining the first time period and the second time period, takes into account data provided to a traffic centre.

7. Method according to any one of claims 1 to 6,
**characterised in that**
the computing device (18) determines the following from the data
- a current traffic volume and/or
- a change in the traffic volume to be expected as a function of the week day and/or the time and/or
- route characteristics on the route (28, 32) of the motor vehicle (10) and/or the emergency vehicle (24) to the destination (20)
and/or
- presence of at least one speed limit on the route (28, 32) of the motor vehicle (10) and/or the emergency vehicle (24) to the destination.

8. Method according to any one of claims 1 to 7,
**characterised in that**
it is identified in response to manual triggering and/or automatic triggering of the emergency call whether a driver of the motor vehicle (10) is responsive and/or fit to drive.

9. Method according to claim 8,
**characterised in that**
- in response to manual triggering of the emergency call in the case of the driver not being fit to drive and
- in response to automatic triggering of the emergency call in the case of the driver not being fit to drive and/or in the case of the driver not being responsive,
an autonomous driving function (70) of the motor vehicle (10) is activated and the motor vehicle (10) is driven autonomously to the destination.

10. Method according to any one of claims 1 to 9,
**characterised in that**
during the journey of the motor vehicle (10) to the destination (20) it is monitored by means of at least one monitoring device (66) of the motor vehicle (10) whether a driver of the motor vehicle (10) is fit to drive, wherein in the case of fitness to drive being impaired, at least one warning signal is emitted and/or an autonomous driving function (70) of the motor vehicle (10) is activated and the motor vehicle (10) is driven autonomously to the destination.

11. System for determining a route (28) from a location of a motor vehicle (10) to a destination (20), with a control device (12) of the motor vehicle (10) which is designed to transmit an emergency call to a receiver (14) of a centre (16) of the system, wherein a computing device (18) of the centre (16) is designed to determine the route (28) to the destination (20), wherein the computing device (18) of the centre (16) is designed, when selecting the destination (20), to take into account a first time period which the motor vehicle (10) requires to cover the route (28),
wherein the computing device (18) is designed to take into account a second time period which an emergency vehicle (24) requires to reach the destination (20) and is designed to select the destination (20) such that a sum of the two time periods is minimal,
**characterised in that** the computing device (18) is designed to take into account when determining the first time period and the second time period data provided by additional motor vehicles, wherein the computing device (18) is designed to determine the following from the data
- switching of traffic lights on the route (28, 32) of the motor vehicle (10) and/or the emergency vehicle (24) to the destination (20) and/or
- a possibility of violating at least one speed limit on the route (28, 32) of the motor vehicle (10) and/or the emergency vehicle (24) to the destination (20) whilst continuing to safely drive the motor vehicle (10) and/or the emergency vehicle (24).

## Revendications

1. Procédé de détermination d'un itinéraire (28) entre un lieu où se trouve un véhicule automobile (10) et une destination (20), dans lequel un dispositif de commande (12) du véhicule automobile (10) transmet un appel d'urgence à un récepteur (14) d'une centrale (16), et dans lequel un dispositif de calcul (18) de la centrale (16) détermine l'itinéraire (28) jusqu'à la destination (20),
dans lequel le dispositif de calcul (18) de la centrale (16) lors d'une sélection de la destination (20) prend en compte un premier laps de temps, dont le véhicule automobile (10) a besoin pour parcourir l'itinéraire (28),
et dans lequel le dispositif de calcul (18) prend en compte un second laps de temps, dont un véhicule de secours (24) a besoin pour atteindre la destination (20), dans lequel le dispositif de calcul (18) sélectionne la destination (20) de sorte qu'une somme des deux laps de temps soit minimale,
**caractérisé en ce que**
le dispositif de calcul (18) lors de la détermination du premier laps de temps et du second laps de temps prend en compte des données mises à disposition par d'autres véhicules automobiles, dans lequel
le dispositif de calcul (18) détermine à partir des données
- une commutation de feux de signalisation sur l'itinéraire (28, 32) du véhicule automobile (10) et/ou du véhicule de secours (24) jusqu'à la destination (20) et/ou
- une possibilité, en maintenant un mode de conduite sûr du véhicule automobile (10) et/ou du véhicule de secours (24), de dépasser au moins une limitation de vitesse sur l'itinéraire (28, 32) du véhicule automobile (10) et/ou du véhicule de secours (24) jusqu'à la destination (20).

2. Procédé selon la revendication 1,
**caractérisé en ce que**
le dispositif de calcul (18) détermine sur la base de données cartographiques et/ou sur la base de données mises à disposition par d'autres véhicules automobiles une pluralité de destinations possibles (20, 22) et sélectionne à partir des destinations possibles (20, 22) la destination (20) à atteindre par le véhicule automobile (10) et le véhicule de secours (10).

3. Procédé selon la revendication 1 ou 2,
**caractérisé en ce que**
le dispositif de calcul (18) détermine une pluralité de destinations possibles (20, 22) et/ou une pluralité de véhicules de secours possibles (24) en fonction d'une distance des destinations (20, 22) et/ou des véhicules de secours (24) par rapport au véhicule automobile (10).

4. Procédé selon l'une quelconque des revendications 1 à 3,
**caractérisé en ce que**
des données d'un dispositif d'émission (34) de la centrale (16),
- qui indiquent une position géographique de la destination (20), et/ou
- qui indiquent l'itinéraire (28) du véhicule automobile (10) jusqu'à la destination (20) et l'itinéraire (32) du véhicule de secours (24) jusqu'à la destination (20),
sont transmises d'une part à un système de navigation (36) du véhicule automobile (10) et d'autre part à un système de navigation (38) du véhicule de secours (24).

5. Procédé selon l'une quelconque des revendications 1 à 4,
**caractérisé en ce que**
le dispositif de calcul (18) vérifie, en particulier sur la base d'informations de circulation et/ou sur la base de données mises à disposition par d'autres véhicules automobiles, pendant que le véhicule automobile (10) et le véhicule de secours (24) se rendent à la destination (20), si au moins une hypothèse formulée lors de la sélection de la destination (20) est exacte, et en cas de constatation d'une divergence de l'au moins une hypothèse, l'itinéraire (28, 32) du véhicule automobile (10) et/ou du véhicule de secours (24) jusqu'à la destination (20) et/ou la destination (20) change.

6. Procédé selon l'une quelconque des revendications 1 à 5,
**caractérisé en ce que**
le dispositif de calcul (18) lors de la détermination du premier laps de temps et du second laps de temps prend en compte des données mises à disposition par une centrale de circulation.

7. Procédé selon l'une quelconque des revendications 1 à 6,
**caractérisé en ce que**
le dispositif de calcul (18) détermine à partir des données
- une densité de circulation actuelle et/ou
- un changement attendu de la densité de circulation en fonction du jour de la semaine et/ou de l'heure et/ou
- un état des routes sur l'itinéraire (28, 32) du véhicule automobile (10) et/ou du véhicule de secours (24) jusqu'à la destination (20) et/ou
- une présence d'au moins une limitation de vitesse sur l'itinéraire (28, 32) du véhicule automobile (10) et/ou du véhicule de secours (24) jusqu'à la destination.

8. Procédé selon l'une quelconque des revendications 1 à 7,
**caractérisé en ce que**
un déclenchement manuel et/ou un déclenchement automatique de l'appel d'urgence permet de savoir si un conducteur du véhicule automobile (10) peut communiquer et/ou s'il est apte à conduire.

9. Procédé selon la revendication 8,
**caractérisé en ce que**
- après le déclenchement manuel de l'appel d'urgence en l'absence de capacité de conduire du conducteur et
- après le déclenchement automatique de l'appel d'urgence en l'absence de capacité de conduire du conducteur et/ou en l'absence de capacité du conducteur à communiquer
une fonction de conduite autonome (70) du véhicule automobile (10) est activée et le véhicule automobile (10) est conduit de manière autonome jusqu'à la destination.

10. Procédé selon l'une quelconque des revendications 1 à 9,
**caractérisé en ce que**
il est surveillé pendant la conduite du véhicule automobile (10) jusqu'à la destination (20) au moyen d'au moins un dispositif de surveillance (66) du véhicule automobile (10), si un conducteur du véhicule automobile (10) est apte à conduire, dans lequel en cas d'une altération de la capacité de conduire, au moins un signal d'avertissement est émis et/ou une fonction de conduite autonome (70) du véhicule automobile (10) est activée et le véhicule automobile (10) est conduit de manière autonome jusqu'à la destination.

11. Système de détermination d'un itinéraire (28) entre un lieu où se trouve un véhicule automobile (10) et une destination (20), avec un dispositif de commande (12) du véhicule automobile (10), lequel est réalisé pour transmettre un appel d'urgence à un récepteur (14) d'une centrale (16) du système, dans lequel un dispositif de calcul (18) de la centrale (16) est réalisé pour déterminer l'itinéraire (28) jusqu'à la destination (20),
dans lequel le dispositif de calcul (18) de la centrale (16) est réalisé pour prendre en compte lors d'une sélection de la destination (20) un premier laps de temps, dont le véhicule automobile (10) a besoin pour parcourir l'itinéraire (28),
dans lequel le dispositif de calcul (18) est réalisé pour prendre en compte un second laps de temps, dont un véhicule de secours (24) a besoin pour atteindre la destination (20), et est réalisé pour sélectionner la destination (20) de sorte qu'une somme des deux laps de temps soit minimale,
**caractérisé en ce que**
le dispositif de calcul (18) est réalisé pour prendre en compte lors de la détermination du premier laps de temps et du second laps de temps des données mises à disposition par d'autres véhicules automobiles,
dans lequel le dispositif de calcul (18) est réalisé pour déterminer à partir des données
- une commutation de feux de signalisation sur l'itinéraire (28, 32) du véhicule automobile (10) et/ou du véhicule de secours (24) jusqu'à la destination (20) et/ou
- une possibilité, en maintenant un mode de conduite sûr du véhicule automobile (10) et/ou du véhicule de secours (24), de dépasser au moins une limitation de vitesse sur l'itinéraire (28, 32) du véhicule automobile (10) et/ou du véhicule de secours (24) jusqu'à la destination (20).
